Europäisches Patentamt

European Patent Office

Office européen des brevets

(19)

(11) Veröffentlichungsnummer : **0 452 630 B1**

(12) **EUROPÄISCHE PATENTSCHRIFT**

(45) Veröffentlichungstag der Patentschrift :
**20.07.94 Patentblatt 94/29**

(21) Anmeldenummer : **91102494.1**

(22) Anmeldetag : **21.02.91**

(51) Int. Cl.⁵ : **B01J 38/00**, B01J 37/00,
B01J 38/64

(30) Priorität : **06.03.90 DE 4006918**

(43) Veröffentlichungstag der Anmeldung :
**23.10.91 Patentblatt 91/43**

(45) Bekanntmachung des Hinweises auf die
Patenterteilung :
**20.07.94 Patentblatt 94/29**

(84) Benannte Vertragsstaaten :
**DE FR GB IT NL SE**

(56) Entgegenhaltungen :
**EP-A- 0 043 684**
**EP-A- 0 203 028**
**EP-A- 0 353 467**
**DD-A- 130 793**
**US-A- 4 888 316**

(73) Patentinhaber : **BASF Aktiengesellschaft**
**Carl-Bosch-Strasse 38**
**D-67063 Ludwigshafen (DE)**

(72) Erfinder : **Drews, Ronald, Dr.**
**Pranckhstrasse 22**
**W-6700 Ludwigshafen (DE)**
Erfinder : **Hoelderich, Wolfgang, Dr.**
**Mannheimer Strasse 18c**
**W-6710 Frankenthal (DE)**
Erfinder : **Scheidsteger, Olaf, Dr.**
**Rheindammstrasse 30**
**W-6800 Mannheim 1 (DE)**
Erfinder : **Neth, Norbert, Dr.**
**Ostring 37**
**W-6712 Bobenheim-Roxheim (DE)**

(54) **Verfahren zum Aufarbeiten von Katalysatoren.**

EP 0 452 630 B1

## Beschreibung

Die vorliegende Erfindung betrifft ein Verfahren zur Aufarbeitung von Katalysatoren, die für die Entfernung von Stickoxiden aus Verbrennungsabgasen durch Umsetzung mit Ammoniak bei erhöhten Temperaturen eingesetzt worden sind.

Aus der DD-A-130 793 ist ein Verfahren zur Aufarbeitung gebrauchter Katalysatoren bekannt, wobei die Katalysators teilchen bis zu einer Teilchengröße kleiner als 1,6 μm gemahlen werden.

Für die Entfernung von $NO_x$ aus Abgasen ist bisher eine Reihe von Verfahren bekannt geworden, z.B. katalytische Verfahren, bei denen das $NO_x$ mit einem Brennstoff, z.B. Erdgas oder Methan, in Gegenwart von Edelmetallen als Katalysatoren nicht selektiv zu Stickstoff reduziert wird. Diese Verfahren haben aber technisch keine Bedeutung erlangt, da neben den Stickoxiden auch der in den Abgasen vorhandene Sauerstoff umgesetzt wird, was neben dem Nachteil einer unerwünscht hohen Steigerung der Temperatur den weiteren Nachteil eines hohen Verbrauchs an Brennstoff hat, abgesehen davon, daß die Edelmetallkatalystoren nicht vergiftungsfest sind.

Aus diesem Grunde ist auch ein selektiv arbeitendes katalytisches Verfahren entwickelt worden, bei dem die Stickoxide in Gegenwart von Nichtedelmetallkatalysatoren mit Ammoniak selektiv zu Stickstoff reduziert werden. Dieses unter dem Namen SCR-Verfahren (Selective Catalytic Reduction) bekannt gewordene Verfahren, hat zunehmend an technischer Bedeutung gewonnen.

Bei diesem Verfahren wird praktisch der in den Abgasen enthaltende Sauerstoff nicht angegriffen und der Verbrauch an Ammoniak richtet sich allein nach dem Stickoxid-Gehalt der zu behandelnden Abgase.

Für dieses Verfahren werden verschiedene sogenannte SCR-Katalysatoren eingesetzt.

In der US-A-3 279 884 werden Katalysatoren beschrieben, die katalytisch wirksame Mengen an Vanadin-, Molybdän, und/oder Wolframoxiden enthalten.

In der DE-C-1 253 685 werden darüber hinaus Katalysatoren beschrieben, die auch Manganoxid und/oder Eisenoxid enthalten können.

In der DE-C-2 458 888 werden für den gleichen Zweck Katalysatoren genannt, die

1. Titan in Form von Oxiden und
2. wenigstens ein Element aus der Gruppe

    a) Eisen und Vanadin in Form von Oxiden und/oder Sulfaten und/oder

    b) Molybdän, Wolfram, Nickel, Cobalt, Kupfer, Chrom und Uran in Form von Oxiden sowie gegebenenfalls

3. Zinn in Form von Oxiden und
4. Metalle aus der Gruppe Silber, Beryllium, Magnesium, Zink, Bor, Aluminium, Yttrium, Seltene Erdmetalle, Silicium, Niob, Antimon, Wismut und Mangan in Form von Oxiden

enthalten. Diese Katalysatoren können als Vollkatalysatoren oder auch auf übliche Träger aufgebracht eingesetzt werden.

In der DE-A-3 438 367 werden Katalysatoren beschrieben, die

1. aus einer binären Oxidverbindung des Titans und Siliciums und/oder des Titans und Zirkoniums und/oder einer ternären Oxidverbindung des Titans, Zirkoniums und Siliciums sowie
2. 0 bis 5 Gew.-% eines Vanadinoxids und
3. 1 bis 15 Gew.-% mindestens eines Oxides der Elemente Wolfram, Molybdän, Zinn und Cer

bestehen.

Stickoxide enthaltende Abgase fallen neben der Salpetersäureherstellung vor allem auch bei der industriellen Verfeuerung fossiler Brennstoffe, z.B. in Kraftwerken an. Während die Abgase von Salpetersäureanlagen neben Stickoxiden praktisch nur noch Stickstoff, nicht umgesetzten Sauerstoff und Wasserdampf enthalten, weisen die aus den industriellen Feuerungsanlagen stammenden Abgase zusätzlich, bedingt durch die Zusammensetzung des fossilen Brennstoffes, Schwefeldioxid und bei Abgasen, die aus der Verbrennung von Kohle stammen je nach Verbrennungsart - ob Feuerungen mit Trocken- oder Schmelzascheabzug-wechselnde Mengen an weiteren Bestandteilen auf, die auch die Katalysatoren schädigen können: Genannt seien z.B. Schwermetalle bzw. Schwermetallverbindungen, insbesondere Verbindungen des Arsens sowie Flugstäube, die aufgrund ihres Alkali- und Erdkali- sowie Siliciumgehaltes die Katalysatoren schädigen. Diese Schadstoffe kommen auch in den Abgasen von Müllverbrennungsanlagen und Prozeßofenanlagen wie Röstöfen und in Hochöfen der Stahlindustrie und in Öfen der glasverarbeitenden und keramischen Industrie vor.

Der Austausch solcher desaktivierter SCR-Katalysatoren, die insbesondere in Form von mit Durchgängen versehenen Wabenkörpern eingesetzt werden, gegen neue Katalysatoren ist ökonomisch wegen der hohen Kosten dieser Katalysatoren nicht sinnvoll abgesehen davon, daß auch die Deponie solcher Katalysatoren nicht unerhebliche Kosten nach sich zieht.

Es hat daher nicht an Vorschlägen gefehlt, solche gebrauchten Katalysatoren zu reaktivieren.

Diese Verfahren basieren z.T. auf einer mechanisch abrasiven Behandlung der desaktivierten Katalysatoren. In der JP-A-61 259 764 wird vorgeschlagen, die Katalysatoren durch Bürsten mit Stahlbürsten zu reaktivieren. In den EP-A-203 028 und EP-A-241 310 wird die Behandlung solcher desaktivierter Katalysatoren mit abrasiven Partikeln, z.B. Sand, in einem fluidisierten Bett beschrieben. Diese mechanischen Methoden sind sehr arbeits- und damit kostenintensiv und erfordern beispielsweise besondere Maßnahmen, um eine Abrasion an unerwünschten Stellen, durch die der Katalysator mechanisch geschädigt wird, zu verhindern (vgl. EP-A-241 310). Diese Verfahren sind außerdem auf die Regenerierung von monolithischen Katalysatoren, z.B. Waben- oder Plattenkatalysatoren, beschränkt und lassen sich nicht bei Katalysatoren in Pellet- oder Strangform anwenden.

Es ist auch bekannt, die Katalysatoren durch Behandeln mit Wasser zu regenerieren, um die auf ihnen haftenden alkalischen Verbindungen zu entfernen, jedoch ist diese Methode nur auf diese Schadstoffe beschränkt und auch da wenig effektiv. Aus diesem Grunde ist es auch bekannt, den Katalysator anschließend mit gasförmigem $SO_2$ oder mit wäßrigen Lösungen von Schwefelverbindungen, z.B. Schwefelsäure, Ammoniumhydrogensulfat und dgl., zu behandeln (vgl. EP-A-159 959).

In der JA-A-63 01 429 wird ein Verfahren zur Regenerierung von mit $SiO_2$ belegten SCR-Katalysatoren beschrieben, das darin besteht, daß man diese mit wäßrigen Lösungen von Fluorwasserstoff behandelt. Abgesehen davon, daß sich diese Arbeitsweise schon dadurch verbietet, daß durch Fluorwasserstoff die Bestandteile des Katalysators selbst, insbesondere das $TiO_2$, angegriffen werden, erfordert das Arbeiten mit Fluorwasserstoff wegen seiner Giftigkeit einen besonderen Aufwand.

In der EP-A-161 206 schließlich ist ein Verfahren zur Regenerierung von SCR-Katalysatoren beschrieben, das darin besteht, daß man die Katalysatoren mit wäßrigen Lösungen von Oxalsäure behandelt und sie anschließend mit Verbindungen des Wolframs imprägniert. Dieses Verfahren ist nicht allgemein anwendbar, sondern lediglich auf die Regenerierung solcher Katalysatoren beschränkt, die durch Schwermetalle wie Vanadium, Nickel oder Eisen verunreinigt sind.

Gemäß der DE-A-38 24 464 werden desaktivierte Katalysatoren dadurch regeneriert, daß man die Katalysatoren mit wäßrigen Lösungen von Hydroxiden der Elemente der I. und II. Hauptgruppe und/oder Carbonaten der der Elemente der I. Hauptgruppe des Periodischen Systems der Elemente und anschließend mit Säuren behandelt.

Die genannten bekannten Verfahren beziehen sich auf eine Regenerierung von SCR-Katalysatoren unter Beibehaltung ihrer geometrischen Form, und haben daher zur Voraussetzung, daß die Katalysatoren während ihres Gebrauchs, während ihres Ausbaus aus den Reaktoren bzw. während der Regenerierung nicht beschädigt und damit für einen Wiedereinsatz unbrauchbar werden. Man muß daher bei der Manipulation dieser Katalysatoren beim Ausbau und der Regeneration besondere Sorgfalt walten lassen, um mechanische Beschädigungen zu vermeiden.

Die vorliegende Erfindung hat sich daher die Aufgabe gestellt, ein Verfahren zur Aufarbeitung von insbesondere monolithischen Katalysatoren bereitszustellen, bei dem diese Nachteile nicht auftreten und das es darüber hinaus gestattet, auch mechanisch geschädigte desaktivierte Katalysatoren aufzuarbeiten und so einer Wiederverwendung zuzuführen.

Es wurde gefunden, daß diese Aufgabe dadurch gelöst werden kann, daß man die Katalysatoren auf Korngrößen von 5 bis 20 µm vermahlt und das erhaltene Pulver bei der Herstellung von Katalysatoren frischem Ausgangsmaterial in Mengen von bis zu 80 Gew.-%, bezogen auf das gesamte eingesetzte Material, vor der Verformung zusetzt.

Bei nur oberflächlicher Desaktivierung der Katalysatoren, d.h. wenn der Katalysator nur durch einen dünnen Belag auf der Oberfläche desaktiviert ist, genügt es, den Katalysator, gegebenenfalls nach einer groben Reinigung z.B. durch Abblasen oder Absaugen von anhaftendem Staub zu befreien und dann auf Korngrößen von 5 bis 20 µm, vorzugsweise von 10 bis 15 µm zu vermahlen. Der vermahlene Katalysator wird dann bei der Herstellung neuer Katalysatoren, die in der Zusammensetzung dem desaktivierten Katalysator entsprechen, dem frischen Ausgangsmaterial in Mengen von bis zu 80 Gew.-%, vorzugsweise in Mengen von bis zu 45 Gew.-%, bezogen auf das insgesamt eingesetzte Material, zugesetzt. Überraschenderweise zeigen Katalysatoren, die unter Mitverwendung der feingemahlenen desaktivierten Katalysatoren hergestellt worden sind allenfalls eine nur geringfügig verminderte Aktivität gegenüber Katalysatoren, die ausschließlich aus frischen Ausgangsmaterialien hergestellt worden sind.

Bei Katalysatoren, die durchgehend vergiftet sind, was leicht durch spektroskopische Untersuchungen festgestellt werden kann, ist es vorteilhaft, den Katalysator nicht auf die oben angegebene Feinheit zu vermahlen, sondern zunächst auf größere Korngrößenbereiche, z.B. von 1 bis 20 mm zu zerkleinern. Die so zerkleinerten Katalysatoren werden dann mit wäßrigen Lösungen von Hydroxiden der Elemente der I. und/oder II. Hauptgruppe und/oder Carbonaten der Elemente der I. Hauptgruppe des Periodischen Systems der Elemente und anschließend mit Säuren behandelt.

Als wäßrige Lösungen kommen die Hydroxide als Elemente der ersten und zweiten Hauptgruppe sowie die Carbonate der Elemente der ersten Hauptgruppe des Periodischen Systems in Betracht, die man in Form von Lösungen mit einer zweckmäßig 50 Gew.-% nicht übersteigenden Konzentrationen einsetzt. Bei den Erdalkalihydroxiden, die nur eine geringe Wasserlöslichkeit haben, setzt man zweckmäßig gesättigte oder nahezu gesättigte Lösungen ein (Löslichkeit von $Ca(OH)_2$ : 0,118 g CaO/100 g $H_2O$, $Ba(OH)_2$ : 3,48 g BaO/100 g $H_2O$). Im Falle der besonders bevorzugten Hydroxide und Carbonate des Natriums und Kaliums wählt man bevorzugt Konzentrationen von 0,1 bis 15 Gew.-%. Die Behandlung mit den wäßrigen Lösungen kann bei Raumtemperatur (20°C) durchgeführt werden, sie kann aber auch bei erhöhten Temperaturen von z.B. bis zu 150°C vorgenommen werden. Zweckmäßig arbeitet man jedoch bei Temperaturen unterhalb von 100°C, besonders bevorzugt bei Temperaturen von 40 bis 95°C. Die Dauer der Behandlung richtet sich nach dem Grad der Desaktivierung des Katalysators, der Konzentration der Lösung und der Temperatur und kann von 10 bis 120 min betragen. Die erfindungsgemäße Behandlung mit den wäßrigen Lösungen kann in ruhender oder auch in bewegter Lösung, z.B. in einem von der Lösung durchströmten Steigrohr, erfolgen.

Bevor die mit den wäßrigen Hydroxid- bzw. Carbonatlösungen behandelten Katalysatoren der Säurebehandlung unterzogen werden, können diese vorteilhaft einer Behandlung mit Wasser bei 20°C oder erhöhten Temperaturen, zweckmäßig unter 100°C, unterzogen werden.

Als Säuren kann man sowohl organische als auch anorganische Säuren, bevorzugt aber anorganische Säuren, einsetzen. Als Säuren kommen bevorzugt solche in Betracht, die die Bestandteile des Katalysators nicht angreifen. Aus wirtschaftlichen Gründen wird man Salzsäure, Salpetersäure, insbesondere aber Schwefelsäure wählen. Zweckmäßig setzt man die Säuren ebenfalls nicht konzentriert, sondern mit Wasser verdünnt ein. Es hat sich als zweckmäßig erwiesen, 0,01 bis 3 n Säuren einzusetzen. Auch die Säurebehandlung kann, wie die Behandlung mit den Alkalihydroxidlösungen, bei den dort genannten Temperaturen und Zeiten durchgeführt werden.

Die Behandlung kann, wenn nötig, mehrmals wiederholt werden. Sollte ein Austrag an Komponenten während des Behandlungsprozesses erfolgen, so können diese erneut durch Tränkung, Imprägnierung oder sonst bekannte Methoden aufgebracht werden.

Nach der Säurebehandlung wird der Katalysator gegebenenfalls nach einer (weiteren) Waschung mit Wasser getrocknet und dann, wie oben angegeben, auf Korngrößen von 5 bis 20 μm vermahlen.

Die erhaltenen Pulver können dann wieder zur Herstellung von Katalysatoren verwendet werden, indem man sie, wie oben beschrieben, bei der Herstellung von Katalysatoren den frischen Ausgangskomponenten in einer Stufe vor der Verformung zusetzt.

Die erfindungsgemäße Behandlung kann vor allem mit Katalysatoren auf Basis von Titanoxiden die katalytische Mengen an Wolfram-, Vanadin- und Molybdänoxiden sowie gegebenenfalls andere Metalloxide und/oder -Sulfate enthalten, wie sie z.B. in der eingangs zitierten DE-C-24 58 888 beschrieben sind, durchgeführt werden.

Beispiele 1 bis 4

Ein monolithischer desaktivierter Katalysator, der nur oberflächendesaktiviert war, wurde zunächst durch Absaugen entstaubt und dann auf eine Korngröße von 10 bis 15 μm vermahlen. Der Katalysator bestand aus 83 Gew.-% $TiO_2$, 0,5 Gew.-% $V_2O_5$ und 9 Gew.-% $WO_3$, Rest $SiO_2$, $AlO_2$ und CaO.

Das Pulver wurde in Anteilen von 10, 20, 40 und 75 Gew.-% mit den entsprechenden frischen Ausgangskomponenten vermischt und zu Waben mit den Abmessungen 50 mm x 50 mm x 350 mm verformt, diese getrocknet und bei 600°C calciniert.

Zur Testung ihrer Aktivität wurden sie mit einem synthetisch hergestellten Rauchgas mit 200 Vol.ppm NO, 240 Vol.ppm $NH_3$, 500 Vol.ppm $SO_2$, 2 Vol.-% $O_2$, 10 Vol.-% $H_2O$-Dampf, Rest Stickstoff bei 380°C und einer Raumgeschwindigkeit von 21.300 $h^{-1}$ beaufschlagt. Der Katalysator des Vergleichbeispiels bestand ausschließlich aus frischen Ausgangskomponenten.

EP 0 452 630 B1

| Katalysator | Anteil an Altkatalysator [%] | NO-Abbau [%] | Aktivitäts-kennzahl K [m/h] |
|---|---|---|---|
| Vergleichsbeispiel 1 | 0 | 55,0 | 39,8 |
| Beispiel 1 | 10 | 54,5 | 39,3 |
| Beispiel 2 | 20 | 55,0 | 39,8 |
| Beispiel 3 | 40 | 53,5 | 38,2 |
| Beispiel 4 | 75 | 50,3 | 34,9 |

Aus den in der Tabelle zusammengestellten Ergebnissen ist zu ersehen, daß das Zumischen von bis zu 20 % gebrauchten Katalysators keine Minderung der Katalysatoraktivität bewirkt. Bei einem Anteil von 40 % kommt es zu einer geringfügig verschlechterten und bei einem Anteil von 75 % zu einer etwas weiter verschlechterten, aber noch tragbaren Aktivität.

Beispiele 5 bis 6

Ein durchgehend desaktivierter monolithischer Katalysator, der in Beispiel 1 angegebenen Zusammensetzung wurde zunächst auf Korngrößen von 1 bis 20 mm zerkleinert. Das so zerkleinerte Material wurde zunächst 1 Stunde lang mit 1 N Natronlauge und dann 1 weitere Stunde mit 1 N Schwefelsäure jeweils bei 20°C behandelt. Der so behandelte zerkleinerte Katalysator wurde nach dem Trocknen auf eine Korngröße von 10 bis 15 µm pulverisiert und, wie in Beispiel 1 beschrieben, in Mengen von 20 Gew.-% mit frischen Ausgangsmaterialien versetzt und zu den in Beispiel 1 beschriebenen Waben verformt. Die Testung des so erhaltenen Wabenkatalysators erfolgte wie in Beispiel 1 beschrieben und wird in Vergleich gesetzt zu einem Wabenkatalysator aus frischen Ausgangskomponenten. Gemäß Beispiel 5 wurde ein aus einem Altkatalysator gewonnenes Pulver eingesetzt, das jedoch im Unterschied zu Beispiel 6 nicht einer Laugen/Säurebehandlung unterzogen worden ist.

| Katalysator | Anteil an Altkatalysator [%] | Wäsche | NO-Abbau [%] | Aktivitäts-kennzahl K [m/h] |
|---|---|---|---|---|
| Vergleichsbeispiel 2 | 0 | – | 55,0 | 39,8 |
| Beispiel 5 | 20 | nein | 48,3 | 32,9 |
| Beispiel 6 | 20 | ja | 54,0 | 38,7 |

Aus den Ergebnissen ist zu ersehen, daß bei einem durchgehend vergifteten Katalysator das Zumischen ohne vorausgegangene Wäsche zu deutlichen Aktivitätsverlusten führt. Durch den Waschvorgang läßt sich dieser weitgehend aufheben.

**Patentansprüche**

1. Verfahren zur Aufarbeitung von insbesondere monolithischen Katalysatoren, die für die Reduktion von Stickoxiden in Rauchgasen durch Reduktion mit Ammoniak verwendet worden sind, dadurch gekennzeichnet, daß man die Katalysatoren auf Korngrößen von 5 bis 20 µm vermahlt und das erhaltene Pulver bei der Herstellung von Katalysatoren frischem Ausgangsmaterial in Mengen von bis zu 80 Gew.-%, bezogen auf das gesamte eingesetzte Material, vor der Verformung zusetzt.

2. Verfahren nach Anspruch 1, dadurch gekennzeichnet, daß man das Pulver dem frischem Ausgangsmaterial in Mengen von bis zu 45 Gew.-%, bezogen auf das gesamte eingesetzte Material, zusetzt.

5

3. Verfahren nach Ansprüchen 1 bis 2, dadurch gekennzeichnet, daß man die Katalysatoren auf Korngrößen von 1 bis 20 mm zerkleinert, die zerkleinerten Katalysatoren mit wäßrigen Lösungen von Hydroxiden der Elemente der I. und II. Hauptgruppe und/oder Carbonaten der I. Hauptgruppe des Periodischen Systems der Elemente und anschließend mit Säuren behandelt, die zerkleinerten Katalysatoren trocknet und auf Korngrößen von 5 bis 20 μm mahlt.

## Claims

1. A process for working up in particular monolithic catalysts which have been used for the reduction of oxides of nitrogen in stack gases by reduction with ammonia, wherein the catalyst is milled to a particle size of from 5 to 20 μm and, in the preparation of catalysts, the powder obtained is added to fresh starting material in amounts of up to 80% by weight, based on the total material used, prior to molding.

2. A process as claimed in claim 1, wherein the powder is added to the fresh starting material in amounts of up to 45% by weight, based on the total material used.

3. A process as claimed in claim 1 or 2, wherein the catalyst is comminuted to a particle size of from 1 to 20 mm, the comminuted catalyst is treated with an aqueous solution of a hydroxide of an element of main group I or II or a carbonate of main group I of the Periodic Table of Elements and then with an acid and the comminuted catalyst is dried and is milled to a particle size of from 5 to 20 μm.

## Revendications

1. Procédé de retraitement de catalyseurs, en particulier monolithiques, qui ont été utilisés pour la réduction d'oxydes d'azote dans des gaz de combustion par réduction par l'ammoniac, caractérisé en ce qu'on broie les catalyseurs à des grosseurs de grains de 5 à 20 μm et on ajoute la poudre obtenue, à de la matière de départ fraîche, au cours de la fabrication de catalyseurs, dans des proportions allant jusqu'à 80% en poids par rapport à la matière utilisée totale, avant le façonnage du catalyseur.

2. Procédé selon la revendication 1, caractérisé en ce qu'on ajoute la poudre à la matière de départ fraîche dans des proportions allant jusqu'à 45% en poids par rapport à la matière utilisée totale.

3. Procédé selon la revendication 1 ou 2, caractérisé en ce qu'on concasse les catalyseurs en menus fragments de 1 à 20 mm, on traite les catalyseurs concasses par des solutions aqueuses d'hydroxydes des éléments des groupes IA et IIA et/ou de carbonates du groupe IA du système périodique des éléments, puis par des acides, on sèche les catalyseurs concassés et on les broie à des grosseurs de grains de 5 à 20 μm.